Europäisches Patentamt

European Patent Office

Office européen des brevets

(11) Publication number: **0 074 174**
**A1**

(12) # EUROPEAN PATENT APPLICATION

(21) Application number: **82304028.2**

(22) Date of filing: **30.07.82**

(51) Int. Cl.³: **F 02 B 19/10**
**F 01 L 7/02, F 02 B 19/02**

(30) Priority: **01.08.81 GB 8123624**
**14.11.81 GB 8134374**

(43) Date of publication of application:
**16.03.83 Bulletin 83/11**

(84) Designated Contracting States:
**AT BE CH DE FR GB IT LI LU NL SE**

(71) Applicant: **Kinnersly, Richard Furneaux**
**Bramfield Slab Lane**
**West Wellow Nr. Romsey Hampshire(GB)**

(72) Inventor: **Kinnersly, Richard Furneaux**
**Bramfield Slab Lane**
**West Wellow Nr. Romsey Hampshire(GB)**

(74) Representative: **Lally, William et al,**
**FORRESTER & BOEHMERT Widenmayerstrasse 4**
**D-8000 Munchen 22(DE)**

(54) **Improvements relating to internal combustion engines and rotary valve members therefor.**

(57) An internal combustion engine comprises a body (6) defining a cylinder (8), within which a piston (10) is mounted, and a cylinder head (12) secured to the body (6) over the cylinder (8), a chamber (16) being provided between the body and cylinder head within which a rotary valve member or rotor (18) is mounted for rotation in bearings (19). The rotor provides inlet ports (20) and exhaust ports (22) which are sequentially brought into communication with the cylinder to deliver a combustible fluid to the cylinder wherein the combustible fluid is ignited, and to exhaust gases from the cylinder. The rotor (18) is provided with a supplementary chamber (70) which is periodically brought into communication with the engine cylinder, and ignition means (72,74,75) which is operative to ignite combustible fluid in the supplementary chamber (70). Conveniently combustible fluid is delivered to the supplementary chamber (70) from the engine cylinder (8) prior to operation of the ignition means, but may be supplied to the supplementary chamber (70) by separate injection means (78). The rotor (18) comprises cooling means (33,35,36) through which cooling fluid is caused to flow during rotation of the rotor, to reduce the temperature of the rotor in operation. Sealing means (46 or 142 or 154) is provided which is operative between the opening into the engine cylinder and the circumferential surface (26) of the rotor to reduce the escape of gases from the cylinder.

./...

FIG 1

Title: "Improvements relating to internal combustion
engines and rotary valve members therefor"

This invention is concerned with improvements
relating to internal combustion engines of the kind
(hereinafter referred to as being of the kind specified)
comprising a cylinder, a piston in the cylinder, means
which is operative alternately to deliver a combustible
fluid (usually a mixture of petrol fuel and air) to the
cylinder wherein the combustible fluid is ignited, and to
exhaust gases from said cylinder. The invention is
particularly but not exclusively concerned with such
engines wherein the admission of combustible fluid to,
and/or the exhaust of gases from, said cylinder is
controlled by a valve member (hereinafter referred to for
convenience as a rotor) mounted for rotation about a
longitudinal axis and having one or more ports which,
during rotation of the rotor, are periodically aligned
and in communication with an opening into the engine
cylinder.

Conventionally used in an internal combustion
engine of the kind specified is ignition means located in
the cylinder, and operable to provide a high voltage
discharge (hereinafter termed a "spark") in the cylinder.
This system has manifest disadvantages: for example, it
is necessary for the spark to be generated at a precise
moment in the cycle of the engine, and it is necessary
for the spark to produce very fast combustion of the fuel
in the engine.

It is a first of the various objects of the present
invention to provide an improved combustion initiation
system in an internal combustion engine.

According to a first aspect of this invention there
is provided an internal combustion engine of the kind
specified, comprising a supplementary chamber which is
periodically brought into communication with the cylinder, and wherein the ignition means is operative to ignite combustible fluid in the supplementary chamber.

Preferably the supplementary chamber is also delivered of combustible fluid prior to or in consequence upon such communication. Such supply may be effected by separate delivery means to deliver combustible fluid to the supplementary chamber, or combustible fluid may be delivered to the supplementary chamber from the engine cylinder prior to ignition of the combustible fluid in the supplementary chamber, or a combination of these may be used.

Thus by (for example) igniting a small quantity of combustible fluid in the supplementary chamber, some of the conflicting requirements encountered in conventional internal combustion engines of the kind specified may be circumvented.

An ignition means may be thus utilised, which ensures that combustion of the fuel in the supplementary chamber takes place, whilst the timing of the initiation of combustion in the cylinder is determined by the bringing of the supplementary chamber into communication with the engine cylinder.

The ignition means may thus be one which more reliably and/or more conveniently produces combustion in the supplementary chamber, by virtue of the reduced need to produce very fast combustion of the fuel therein. For example, the ignition means may be a heated coil, although of course it may be adapted to provide a spark.

Additionally, it is possible by the use of the first aspect of the present invention to deliver to the engine cylinder a weaker mixture of combustible fluid, and/or to use combustible fluid of a lower octane rating, and/or to use combustible fluid without any pre-ignition inhibitor such as lead tetraethyl.

For example, a combustible fluid may be delivered to the supplementary chamber which is different from that delivered to the engine cylinder, particularly being a "richer" mixture of fuel and air.  Indeed, feasibly a different fuel may be delivered to the supplementary chamber, from that delivered to the engine cylinder.

Preferably as distinct from the ignition means being in the supplementary chamber, the ignition means may be located in an ignition chamber which is itself periodically brought into communication with the supplementary chamber.  In this manner, the extent to which the ignition means is subjected to the extreme conditions of temperature and pressure existing in the engine cylinder may be reduced.

On igniting the combustible fluid in the supplementary chamber, the pressure therein will increase, and with the supplementary chamber in communication with the engine cylinder, there will be a rapid migration of hot gas from the supplementary chamber into the engine cylinder which will produce a very rapid combustion of the fuel in the engine cylinder over a large volume.

Ignition of the combustible fluid in the engine cylinder may be effected by the direct action of flame travelling from the supplementary chamber into the engine cylinder, but the construction and arrangement may be such if desired, that the flame is extinguished and incomplete combustion products migrate into the engine cylinder to produce cascade, or avalanche activation of combustion in the engine cylinder by chemical kinetic initiation.

However in either event, by the use of the first aspect of the present invention it is possible to arrange for such ignition of the combustible fluid in the engine cylinder to be initiated at a point in the engine cycle closer to top dead centre than would otherwise be practical.

However, if desired, the time in the cycle of the engine at which such communication occurs in relation to the engine cycle may be varied.

Preferably the supplementary chamber is afforded by a rotary valve member which also provides inlet and/or exhaust ports which are moved into periodic communication with the engine cylinder by rotation of the valve member. Where combustible fluid is delivered to the supplementary chamber by fuel delivery means which injects combustible fluid into the supplementary chamber independent of the delivery of combustible fluid to the engine cylinder, a "richer" mixture of fuel and air may be delivered to the supplementary chamber compared with that delivered to the engine cylinder. However this is not wholly necessary, since the combustible fluid may readily be caused to rotate within the supplementary chamber, producing "stratification" of the fuel components thereof, allowing a "richer" mixture to be provided in the immediate vicinity of the ignition means.

Thus where fuel delivery means is used which is operative to deliver fuel to the supplementary chamber from the engine cylinder, although that mixture so delivered to the supplementary chamber may be "weaker" than in theory is desirable, the "stratification" of the fluid so delivered can ensure acceptable combustion conditions as the supplementary chamber moves into communication with the ignition means.

Alternatively the supplementary chamber may be stationary relative to the cylinder, e.g. in a housing in which the rotary valve member is mounted, the valve member affording a duct to bring the supplementary chamber into periodic communication with the engine cylinder.

Where, in an internal combustion engine of the kind specified, the admission of combustible fluid to, and the exhaust of gases from the engine cylinder is controlled by a rotor, the rotor is, during use, subjected to the high temperature of the exhaust gases, and it is desirable to provide cooling means to reduce the overall temperature of, and to minimise temperature differentials throughout the rotor. Heretofore the provision of rotors for internal combustion engines of the kind specified with cooling means has proved difficult to accomplish with reliability and economy, and it is a second of the various objects of this invention to provide a rotor for an internal combustion engine which is provided with cooling means.

According to a second aspect of this invention, there is provided a rotor for an internal combustion engine of the kind specified, said rotor comprising a generally cylindrical body, with at least one port in the circumferential surface of the body, in which rotor one or more flow passages are provided, each such flow passage comprising a first section lying on or adjacent to the longitudinal axis of the rotor, a second section lying radially outwardly of the first section, and a third section extending between the first and second sections and which is in thermal conductive contact with the body of the rotor.

In use, a coolant fluid will be caused to flow through the flow passage and, at least by virtue of the thermal conductive contact between the third section and the body, will cool the body.

The second section of the passage may be utilised as an inlet section, along which coolant fluid is pumped to the third section and thence to the first section, which latter section is utilised as an outlet section.

Preferably however, the first section of the passage is utilised as an inlet section, along which coolant fluid flows to the third section and thence to the second section, which latter section is thus utilised as the outlet section, and by virtue of the radially outer disposition of the second section, to some extent at least a self-propelling of cooling fluid along the first, second and third sections may be achieved, permitting the separate pumping energy required to obtain such flow to be at least reduced.

Preferably some at least of such passages share a common first section, which is afforded by an axial duct, with the third sections of the passages extending from the axial duct. Preferably some at least of such passages share a common second section, which is conveniently also afforded by an axial duct, advantageously a duct of annular cross-section which extends around the duct affording the first sections.

Thus, inlet sections and outlet sections for the coolant fluid are disposed coaxially (that is one within the other) on one side of the valve member.

Preferably the flow passages comprise one or more flow passages, the third sections of each of which bounds the port or one of the ports of the valve member around three sides thereof.

Preferably the flow passages comprise one or more flow passages which are in thermal conductive contact with the circumferential surface of the body.

Preferably the flow passages comprise one or more flow passages which are in thermal conductive contact with a radially extending face of the rotor.

The third sections at least of the flow passages may be provided in the casting of the rotor, or may be provided by drilling axially, circumferentially and/or radially. Preferably such third sections are afforded by conduits, such as copper tubes, formed to a desired shape and secured in the rotor body during the casting thereof.

Another problem encountered in internal combustion engines of the kind specified is the provision of sealing means which is operative between the rotor and the part of the engine defining the opening into the cylinder, particularly during the ignition and explosion phase of the engine.

Thus according to a third aspect of the invention, there is provided an internal combustion engine of the kind specified comprising a member affording a cavity within which the rotor extends, an opening extending from the cavity to the engine cylinder, wherein there is provided a continuous channel bounding the opening within which channel a sealing member is located, means being provided which is operative in the operation of the engine to urge the sealing member against the rotor.

The member defining the cavity may be the member in which the or part of the engine cylinder is provided, or may be a member secured to the top of that member.

Preferably the sealing member is urged by said means into a position in which it is marginally proud of the surface of the cavity, which would generally correspond to the circumferential surface of the rotor. Preferably the sealing member comprises or is afforded by thin strip material, whereby a relatively small surface area is presented to the rotor.

Preferably the construction and arrangement is such that the pressure which is produced in the engine cylinder is effective to increase the pressure of the sealing member on the rotor and this may constitute said means in its entirity or in part.

The sealing member may be afforded by one or more portions of strip material terminating at junctions at which a small gap is afforded between adjacent end faces of the portions, and preferably additional means is provided to prevent leakage through such small gap. Such additional means may comprise the use of two such sealing members in said channel, so arranged that the small gaps of the two sealing members are not in register.

Alternatively, or in addition, such additional means may be afforded by additional elements which extend across such gap.

According to another aspect of this invention there is provided an internal combustion engine of the kind specified wherein the circumferential surface of the rotor bears against a sealing member extending around the opening into the engine cylinder, and wherein the construction and arrangement is such that pressure in the engine cylinder is operative to move the sealing member into sealing engagement with the circumferential surface of the rotor.

An arrangement of the kind set out in the last preceding paragraph is particularly useful wherein the rotor is journalled on bearings which are fixed in relation to the engine cylinder, and in which the sealing member is capable of limited movement between the cylinder and the rotor.

The invention set out in the last preceding paragraph but one may be applied to a construction in which the sealing member is afforded by, or comprises strip material located in a channel extending around the opening into the engine cylinder, or to a construction in which the sealing member provides an extensive sealing surface against which the circumferential surface of the rotor acts. In such a latter construction preferably the sealing member is mounted for limited movement on that body member of the engine which defines the engine cylinder, and means is provided to effect sealing between the sealing member and that body member.

In such circumstances, such means may be afforded by a relatively simple expedient, such as a resilient member, e.g. an O-ring.

Preferably as viewed in the direction of traverse thereof by the rotor, the sealing surface on the rotor upstream of the opening into the engine cylinder is of greater surface area than that downstream of said opening. In this manner, the wear which takes place of the sealing member, as is caused by the thrust between the sealing member and the rotor, is more evenly balanced, and produces more uniform wear of the sealing member.

Preferably, the sealing member, or at least the bearing surface thereof, is of closed-cell porous construction, e.g. a porous metal.

The above and other of the various aspects of this invention will become more clear from the following detailed description, which is to be read with reference to the accompanying drawings of a preferred embodiment of the invention, and various modifications thereof, which have been selected for the purpose of illustrating the invention by way of example.

In the accompanying drawings:-

FIGURE 1 is a perspective view, part being broken away for the purposes of clarity, of part of the internal combustion engine which is the preferred embodiment of this invention;

FIGURE 2 is a side elevation, part being shown in section, of a rotor which is also illustrative of this invention;

FIGURE 3 is a schematic perspective view of the rotor illustrated in Figure 2;

FIGURE 4 is a schematic sectional view of part of the preferred embodiment, showing the upper part of the engine cylinder and the rotor;

FIGURE 5 is a perspective view of a sealing member of the preferred embodiment;

FIGURE 6 is a schematic sectional view of a first modification concerned with the ignition means of the preferred embodiment;

FIGURE 7 is a schematic sectional view of a second modification, concerned with the ignition means of the preferred embodiment;

FIGURE 8 is a schematic sectional view of a third modification, concerned with the ignition means of the preferred embodiment;

FIGURE 9 is a sectional view taken on the line A-A of Figure 8;

FIGURE 10 is a sectional view taken on the line B-B of Figure 8;

FIGURES 11, 12, 13 and 14 are respectively schematic views illustrating fourth, fifth, sixth and seventh modifications, concerned with the ignition means of the preferred embodiment;

FIGURE 15 is a schematic sectional view of an eighth modification, concerning sealing means of the preferred embodiment;

FIGURE 16 is a plan view of the sealing means shown in Figure 15;

FIGURE 17 is a sectional view taken on the line XVII-XVII of Figure 16;

FIGURE 18 is a sectional view taken on the line XVIII-XVIII of Figure 16;

FIGURE 19 is a view corresponding to Figure 15 showing a ninth modification, concerned with the sealing means of the preferred embodiment;

FIGURE 20 is a view which corresponds to Figure 19 in the same manner that Figure 8 corresponds to Figure 15;

FIGURE 21 is a view, similar to Figure 15, showing a tenth modification concerned with the sealing means of the preferred embodiment;

FIGURE 22 is a plan view of the embodiment shown in Figure 21;

FIGURE 23 is a perspective view of the sealing member shown in Figures 21 and 22;

The preferred embodiment of this invention is and internal combustion engine of the kind specified, comprising a body 6 providing a cylinder 8 within which is mounted a piston 10, and a cylinder head 12 secured to the body. The body 6 and head 12 are each provided with semi-circular cavities 14 and 15 respectively which, when the head is secured to the body provides a cylindrical chamber 16 within which a rotary valve member or rotor 18 is mounted for rotation on bearings 19 about a longitudinal axis extending at right angles to the axis of the cylinder, the rotor being provided with inlet and exhaust ports 20 and 22 respectively which, during rotation of the rotor, are sequentially brought into communication with the cylinder, to allow respectively a combustible fluid comprising a mixture of petroleum fuel and air to enter the cylinder, and burned gases to be ducted from the cylinder.

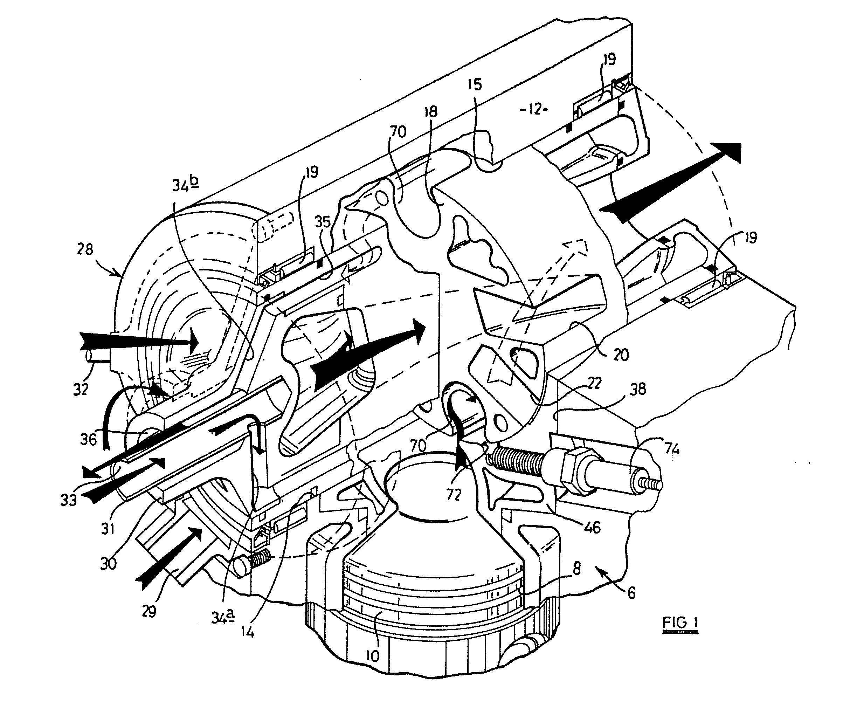

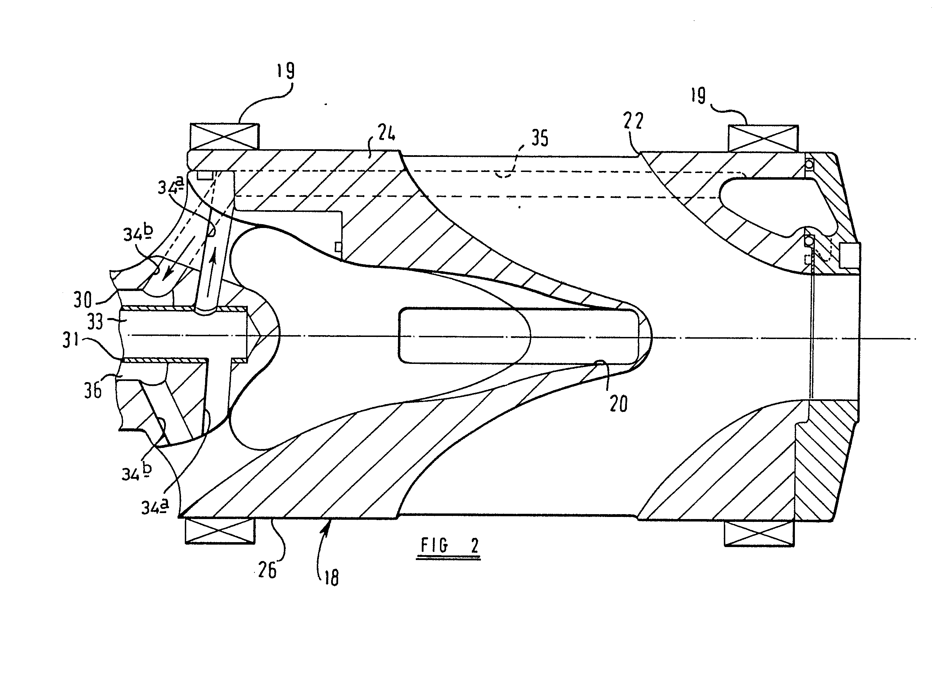

The rotor illustrated in Figures 1, 2 and 3 is provided with cooling means to reduce the temperature attained by the rotor in the operation of the engine, and to reduce thermal stresses throughout the rotor.

The rotor comprises a generally cylindrical body 24 through a circumferential surface 26 of which the ports 20 and 22 extend, these being the ports through which in the rotation of the rotor exhaust gases are ducted to and from the engine cylinder. Mounted over the chamber 16 at one end thereof is an end cap 28, a hollow stem 30 of the rotor extending therethrough, and drive means 32 extends through the end cap to cause rotation of the rotor in synchronism with movement of the engine piston 10. Extending into the hollow stem 30 is a hollow sleeve 31, dividing the stem 30 into an inner section 33 and a circumferentially outer section 36.

The end cap 28 is provided with an inlet duct 29 to which combustible fluid is delivered, and with which, as the rotor rotates in the rotor chamber, the inlet ports are successively aligned.

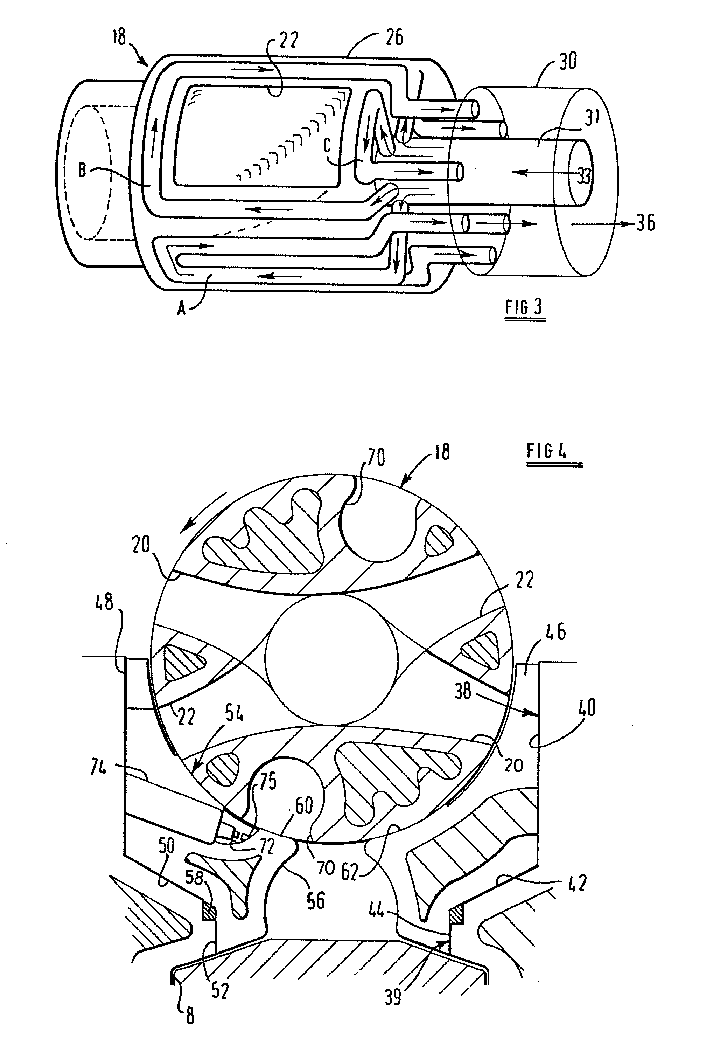

The cooling means of the rotor 18, shown schematically in Figure 3, is in the form of a plurality of cooling circuits A, B, C. All the circuits comprise a common inlet section afforded by the inner section 33 of the stem and a common outlet section, afforded by the outer section 36. Each circuit also comprises an intermediate section extending between the inlet and outlet sections, the path taken by the intermediate section being dependent upon the type of circuit.

Thus, the type A circuit comprises an intermediate section which is in thermal conductive contact with the circumferential surface 26 of the rotor, whilst the type B circuit comprises an intermediate section which extends adjacent to the surface 26 around at least two, and preferably at least three, sides of the exhaust ports 22, whilst the type C circuit comprises an intermediate section comprising radial portions in thermal conductive contact with a radially extending face of the rotor 18 and a circumferential portion adjacent to the circumferential surface 26 and in thermal conductive contact therewith.

It will be appreciated that other types of circuit may be designed if convenient, and one or more type of circuit described above may be combined.

In the use of the engine of which the rotor illustrated in Figure 1 forms part, coolant fluid is pumped into the inner section 33 and flows along passages 34a to the interior of the rotor, along passages 34 through the body of the rotor, and along passages 34b back to the outer section 36. From the outer section 36 the coolant fluid may be ducted to a radiator to be cooled prior to being returned through the inner section 33.

In view of the section 36 being located at a position radially outwardly of the section 33, cooling fluid in said section 36 will have a potential energy which is lower than cooling fluid in the section 33. In this manner, to some extent at least the flow of coolant fluid from the section 33 through the intermediate sections to the section 36 is self-impelling.

The cooling fluid may be water, which may be cooled by the conventional engine radiator, although it may be desirable to maintain separation of the cooling circuit for the rotor and the cooling circuit for the remainder of the engine. Alternatively a pressurised coolant circuit may be utilised for the rotor, or a high boiling point liquid may be utilised, if extremely high rotor temperatures are encountered.

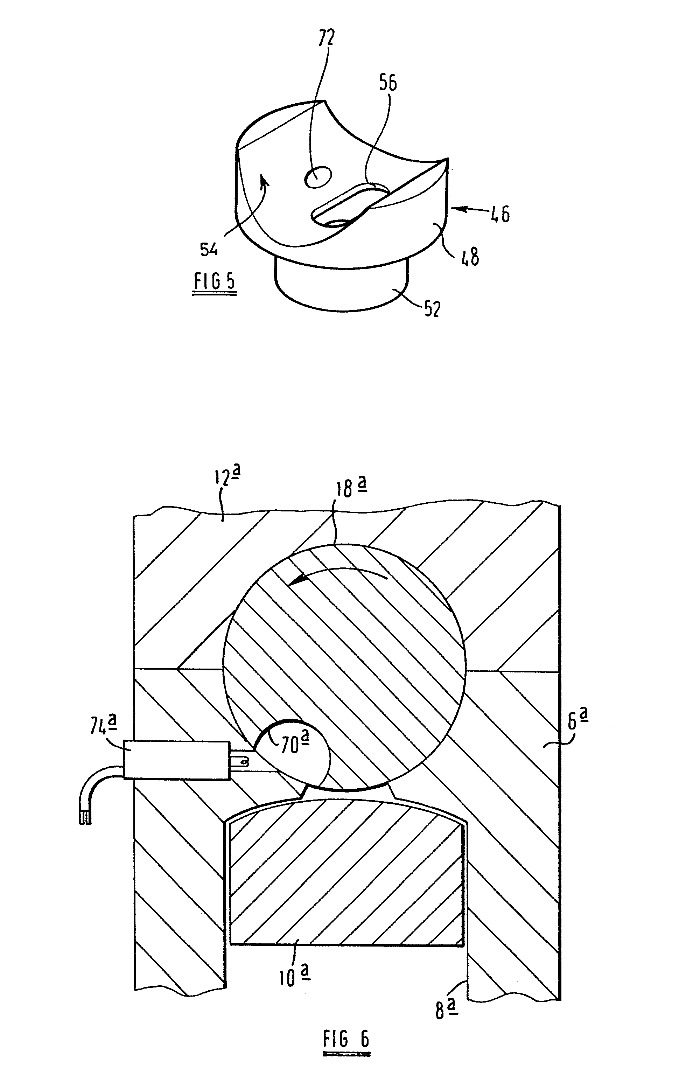

A cavity 38 provided which extends downwardly into the body 6 at right angles to the axis of the cavity 14 and which provides a cylindrical opening 39 extending into the cylinder 8, said cavity 38 being circular in plan view, comprising (in vertical cross-section) generally parallel side faces 40, inwardly convergent sloping side faces 42, and parallel side faces 44 which define the opening 39. Mounted as a tight sliding fit within the cavity 38 (including the opening 39) is a sealing member afforded by a block 46 (see Figure 5) having side faces 48, 50 and 52 complementary to the side faces 40, 42 and 44 of the cavity 38, respectively, said sealing block 46 defining a generally part-cylindrical cavity 54 from which an opening 56 extends into the engine cylinder and in which the rotor 18 extends, part-cylindrical bearing faces being provided on which the rotor seats.

Part of the sealing block 46 defines the top of the engine cylinder, and is thus subjected to pressures occurring within the engine cylinder. As as been said, the sealing block 46 is a tight sliding fit within the cavity 38 and the sealing block 46 thus moves, under the action of the pressure within the engine cylinder, against the rotor, ensuring a sealing contact between the rotor and the bearing faces of the sealing block.

A resilient gasket 58 is provided in a channel in the body 6 which extends around the opening 39, to prevent leakage of gases between the cavity 38 and the sealing block.

If desired, a preload may be provided between the sealing block and the rotor housing, to urge the sealing block against the rotor under static conditions, and which may be afforded by a thin shim or "wavy" spring. Such upward pressure on the sealing block is preferably low, for example in the order of 5lbs. per square inch. However, under dynamic conditions, the sealing block is urged against the rotor by the pressure within the engine cylinder acting on the sealing block.

Preferably the area of a portion 60 of the bearing face which is upstream of the opening 56, is greater than the area of a portion 62 of the bearing face which is downstream of the opening 56. The greater area of contact between the rotor and the bearing face on the leading side, as compared with the trailing side, produces a more uniform wearing of the contact surfaces of the sealing block.

Preferably the sealing block comprises porous material, preferably of a closed-cell porous structure, over part thereof sufficient to provide at least the bearing surfaces 60, 62 thereof. Such a construction enables small reservoirs of oil to be contained in the exposed cells, assisting in the retention of a thin film of oil operative between the peripheral surface of the rotor and the bearing faces.

The rotor 18 is provided with two supplementary chambers 70 which open into the circumferential surface 26 of the rotor.

Also provided in an upper part of the body 6 of the engine and extending through the sealing block 46 is an ignition chamber 72, within which an ignition device 74 is secured, said chamber 72 opening into the cylindrical cavity 54 of the sealing block 46.

As the rotor 18 rotates in the direction shown, the supplementary chambers 70 pass in turn across, in communication with, the ignition chamber 72. On continued rotation of the rotor 18, the supplementary chamber 70 moves into communication with the uppermost part of the engine cylinder, shortly before top dead centre of the piston 10 therein. Compressed gases within the uppermost part of the engine cylinder flow into the supplementary chamber 70 somewhat tangentially, producing a vigorous swirling movement therein, causing a high degree of stratification of the fuel constituent of the gases, presenting to the element 75 of the ignition device 74 a comparatively "rich" fuel.

At or shortly after the point shown in Figure 4, the ignition device 74 ignites the fuel in the chamber 70, and by virtue of the turbulence in the supplementary chamber, combustion of the contents of the chamber 70 taking place relatively quickly. Consequently, burning or hot gases migrate from the chamber 70 into the cylinder 8 to cause combustion of the combustible fluid in the cylinder. In view of the richness of the mixture presented to the element 75 before ignition, the turbulence thereof, ignition of the gases within the chamber 70 may readily be achieved.

By use of the invention described above and illustrated in Figure 4, in view of the significantly higher reliability of ensuring combustion of the fuel within the cylinder 8, significant reductions may be made to the ratio of liquid fuel to air, to the octane rating of the fuel used, and to the use of "anti-knock" additives such as lead tetraethyl, the charge stratification produced by the swirling movement of the combustible fluid in the chamber 70 enabling combustion to be initiated by the device 74, despite fuel having been delivered to the engine cylinder at less than stochiometric strength.

Additionally it is envisaged that thermal conduction between the exhaust port in the valve member 18 and the walls defining the chambers 70 may be utilised to heat said pre-chamber: for example the internal surfaces of the chamber 70 may be provided with an hermetically sealed, removable or integral, thin-section walling adjacent to and forming a division between the exhaust port and said chamber 70, whereby part of, most of, or possibly all of said chamber 70 may be heated by a varying degree of communication with said exhaust port.

Whilst in the embodiment above described the supplementary chamber 70 is of a lesser volume than that of the engine cylinder at top dead centre of the piston, it is possible for the supplementary chamber 70 to constitute a majority of the volume of the main chamber under compression. Thus in the modification shown in Figure 6, in which similar numerals with the suffix a are used to identify parts similar to those illustrated in Figures 1 to 4, a valve member 18a is utilised, having a supplementary chamber 70a which is larger than that shown in Figure 4. Additionally in this modification, to avoid unduly high pressures, and to permit a slightly longer time for stratification of the combustible fluid in the supplementary chamber 70a, said chamber opens into the main cylinder 8a somewhat before top dead centre of the piston 10a. Thus, a fuel mixture of less than stochiometric strength may be delivered to the engine cylinder, and by virtue of the stratification produced in the chamber 70a, a mixture of strength equal to or greater than stochiometric is presented to the ignition device, and at a pressure and turbulence sufficient to cause ignition to be induced by the ignition device.

Additionally in the modification illustrated in Figure 6, the fact that the chamber 70a is not subjected to high pressure until just before combustion is required allows an ignition device 74a to be used which is in the form of a continuous or semi-continuous glow plug or a hot coil ignition device. In this manner the high tension distribution system commonly utilised in internal combustion engines may be dispensed with, and fouling of the spark plug or electrical linkages avoided. In the application illustrated in Figure 6, the hot coil ignition device may be supplied with a voltage sufficient at starting to cause the coil temperature to ignite the fuel in the chamber 70a. However once the engine is running it is envisaged that the voltage supplied to the coil may be reduced accordingly, whilst maintaining a necessary residual voltage to ensure a sufficiently high coil temperature to continue the initiation of combustion in each succeeding cycle.

This partial dependence on current may ensure that the cessation of ignition can be utilised to stop the engine by switching off such residual current.

It is also envisaged that the residual supply voltage to the hot coil ignition device may automatically be varied with respect to engine speed and load, to optimise the hot coil temperature.

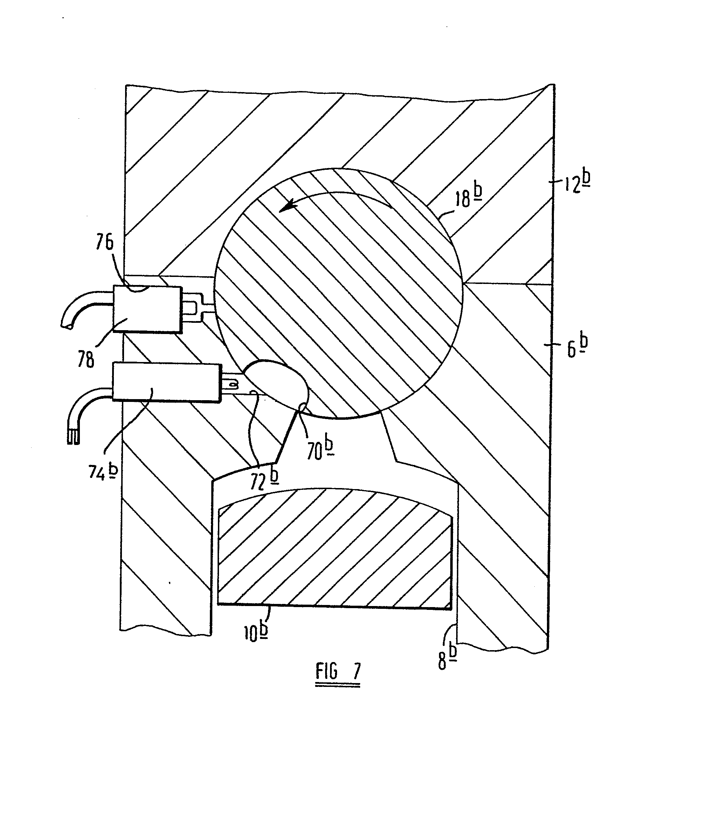

Whilst in the embodiments illustrated in Figures 4 and 6, the fuel which is delivered to the supplementary chamber 70 is part of the fuel which is delivered to the main engine cylinder, in a modification of the preferred embodiment illustrated in Figure 7, in which similar numerals with the suffix b are used to identify parts similar to those illustrated in Figures 1 to 4, an injection chamber 76 is provided in an upper part of the body 6b of the engine, into which a low pressure fuel injection nozzle 78 is secured, and which is preferably intermittently operative. Thus prior to the supplementary chambers 70b moving in turn past the ignition chamber 72b, said supplementary chambers move first across the injection chamber 76, at which a mixture of fuel and air is injected into the chamber. Subsequently the chamber moves from communication with the injection chamber and into communication with the ignition chamber 72b, at which the fuel in the supplementary chamber 70b is ignited.

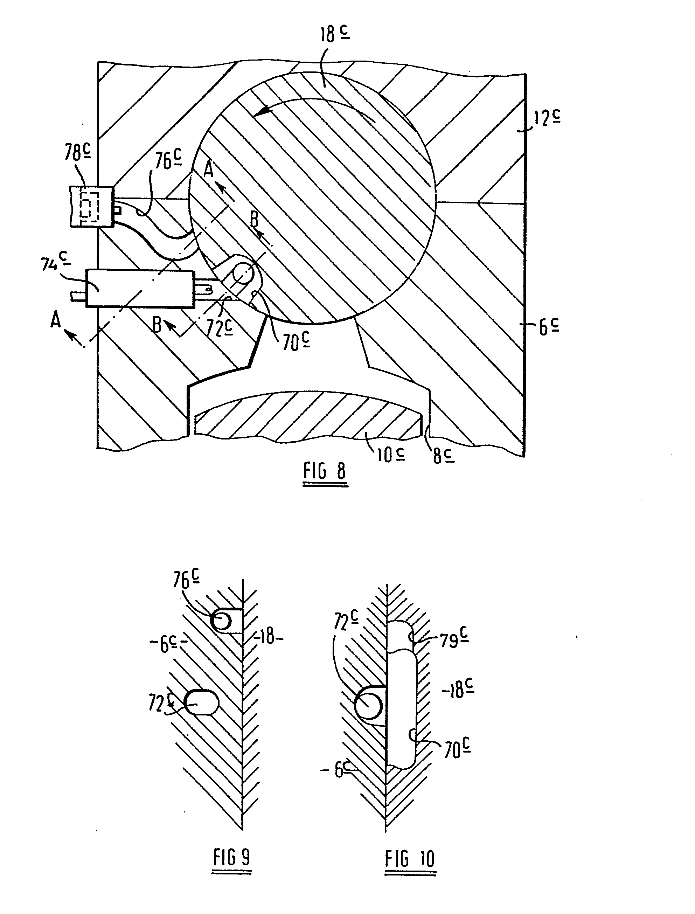

In a further modification of the preferred embodiment, illustrated in Figures 8, 9 and 10, in which similar numerals with the suffix c are used to identify parts similar to those illustrated in Figures 1 to 4, fuel is delivered to the supplementary chamber 70c by a high pressure delivery device 78c, delivering fuel through a feed passage 76c which is displaced relative to the supplementary chamber 70c in an axial direction, delivery of such fuel to the chamber 70c being effected by alignment of said feed passage 76c with a transfer duct 79c in the rotor 18 opening into the chamber 70c. Thus during rotation of the rotor 18, combustible fluid, conveniently consisting of a mixture of fuel and air, passes from the delivery device 78c into the chamber 70c as the transfer duct 79c passes the feed passage 76c. On continued rotation of the rotor 18, the transfer duct 79c moves out of engagement with the feed passage 76c, and the chamber 70c passes across the ignition chamber 72c, and combustible fluid within the chamber 70c is ignited by the ignition device 74c. High temperatures and pressures develop within the supplementary chamber 70c whilst the valve member continues to rotate, until the establishment of communication between the chamber 70c and the uppermost part of the engine cylinder 8c, whereupon a jet of flame sweeps from the supplementary chamber into the cylinder, causing very fast combustion of the fuel therein. Thus initiation of combustion of the combustible fluid in the engine cylinder 8c may take place very quickly, allowing such initiation to occur at a point very close to the top dead centre position of the piston.

This modification provides a significant advantage, in that a very small charging piston need be utilised to deliver combustible fluid to the supplementary chamber, and that this charging piston may be supplied by a small carburettor. Alternatively, the use of such a charging cylinder may be avoided, and a pressurised gas (such as propane) mixed with air under pressure may be delivered through the feed passage 76c by the injection device 78c.

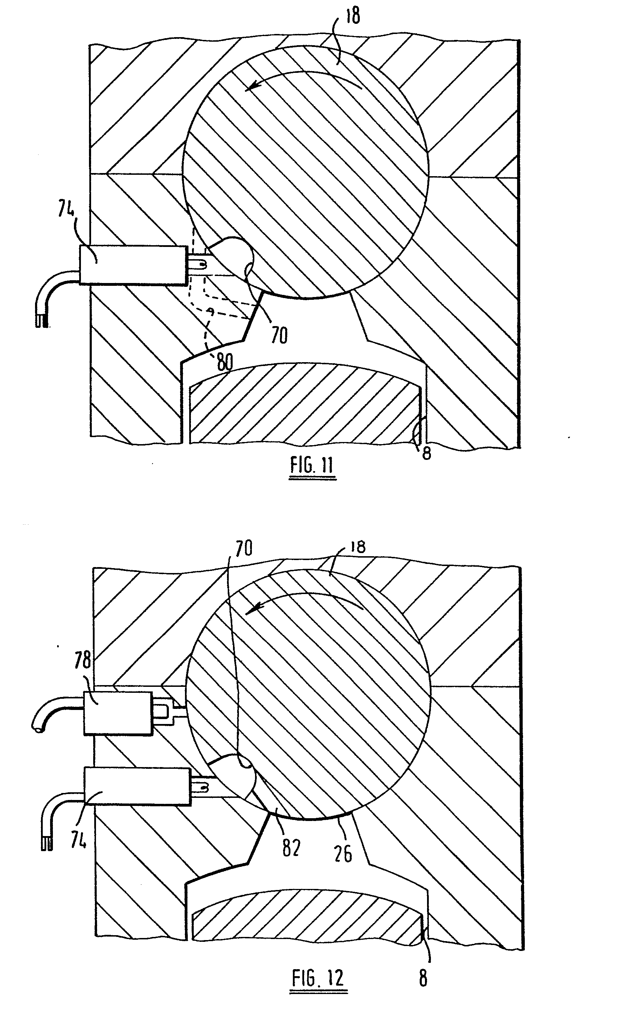

In a further modification of the preferred embodiment illustrated in Figure 11, in place of the injection device 78, a delivery passage 80 extends from the uppermost portion of the cylinder 12, and opens into the cylindrical cavity 14 in which the rotor extends at the point occupied in the modification illustrated in Figure 7, by the injection chamber 72. Thus with the rotor and supplementary chamber 70 in the relative positions shown in Figure 11, in which fuel and air have been delivered to the cylinder 8, with the piston 10 rising towards top dead centre, part of the fuel and air delivered to the cylinder 8 is forced through the delivery passage 80 into the chamber 70. Preferably the delivery passage 80 opens into the cylindrical cavity 14 in an orientation such as to ensure the creation of a swirling movement of combustible fluid delivered to the supplementary chamber 70 when such communication occurs.

In this manner the fuel within the chamber 70 stratifies, producing a higher concentration of petrol to air in the radially outermost region of the chamber 70, allowing the mixture in the chamber 70 to be readily ignited by the ignition device 74 notwithstanding that the fuel delivered to the engine cylinder is less than stochiometric.

In a further modification of the preferred embodiment illustrated in Figure 12, a short passage 82 extends from the leading face of the supplementary chamber 70, and opens into the circumferential surface 26 of the rotor 18. Thus, fuel is delivered under relatively low pressure to the chamber 70 from the device 78, and as the passage 82 opens into communication with the engine cylinder 8, gases under pressure flow through the passage 82, pressurising the chamber 70 causing a swirling movement of gases therein, and ignition of the contents of the chamber 70 by the device 74. Advantageously, the passage 82 is also arranged so as to cause hot gases to pass from the supplementary chamber 70through said passage 82, and enter the cylinder 8 generally tangentially, to swirl around the uppermost part of said cylinder. The passage 82 (of which there may be more than one) may be of a dimension sufficiently small to cause quenching of the flame travelling therealong from the supplementary chamber 70, whereby chemical kinetic initiation of combustion of the fuel in the cylinder 8takes place, or may be sufficient merely to produce a jet of flame which produces rapid combustion of said fuel.

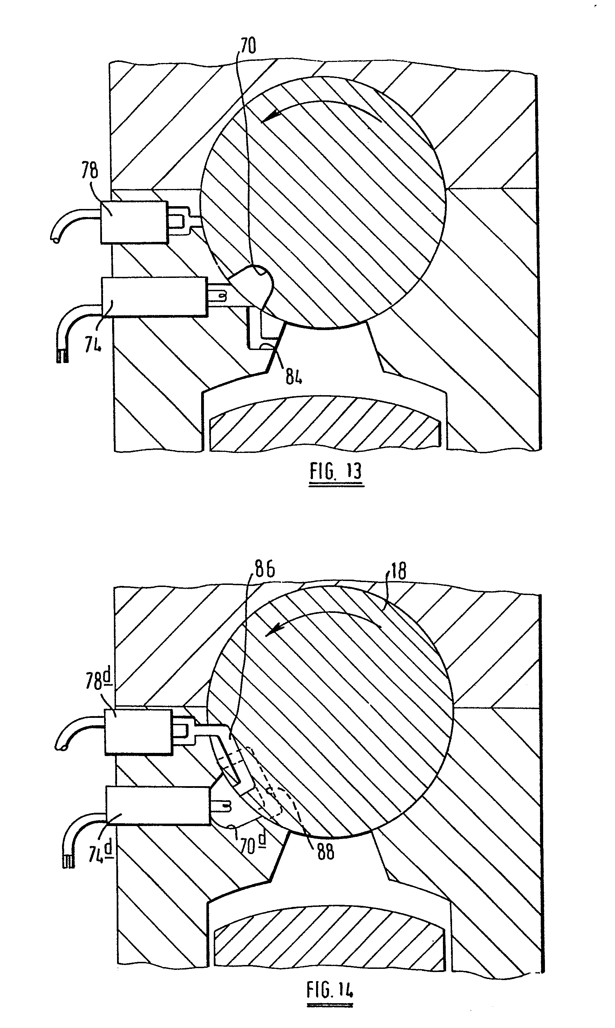

In a further modification of the preferred embodiment illustrated in Figure 13 an arrangement alternative to that shown in Figure 11 is used, in which a passage 84, corresponding to the passage 82 of the modification illustrated in Figure 11, is provided in the body of the engine. If desired, the passage 84 could be arranged to establish communication between the engine cylinder and the supplementary chamber 70 subsequent to the delivery of fuel thereto by the injection device 78, and prior to the establishment of communication between the chamber 70 and the ignition device 74. In this manner, initiation of combustion of the fluid within the chamber 70 may take place at a point where there is no communication between the chamber 70 and the cylinder 8, permitting such combustion to be initiated at leisure, and allowing pressure to build up within the chamber 70 prior to the re-establishment of communication thereof with the cylinder 12, producing a very rapid migration of flame from the chamber 70 into the cylinder 12 as will produce very fast combustion of the fuel within the cylinder 8.

In a further modification of the preferred embodiment illustrated in Figure 14, in which similar numerals with the suffix d are used to identify parts similar to those illustrated in Figures 1 to 4, the supplementary chamber 70d is not afforded by the rotary valve member 18, but is provided in the body of the engine. The valve member 18 is afforded with two ducts, namely a fuel delivery duct 86, and an ignition duct 88. During rotation of the valve member 18, the delivery duct affords communication between the injection device 78d and the chamber 70d, allowing fuel to be delivered to the chamber 70d. When the duct 86 has moved to a circumferential position at which the chamber 70d is no longer in communication with the injection chamber 76d, the ignition device 74d operates to ignite the fuel within the chamber 70d. The ignition duct 88 then affords communication between the supplementary chamber 70d and the cylinder 8, causing the ignited fuel within the chamber 70d to effect ignition of the fuel within the cylinder 8.

Alternatively, where the ignition device is afforded by a continuously or semi-continuously powered heating coil, combustion can be initiated automatically when the communication established between the chamber 70d and the engine cylinder 8 establishes adequate pressure and turbulence within the chamber 70d.

As an alternative expedient to that shown in Figure 14, fuel may be delivered to the chamber 70d from the cylinder 8, by the use of a supplementary duct similar to that numbered 80, Figure 11.

With the modifications illustrated in Figures 6 to 9, there may be provided a plurality of ducts 80 or 82, or 84 or 86 and/or 88.

In the various modifications described above, if desired the supplementary chamber 70 may be divided axially into one or more sub-compartments.

Preferably means is provided for effecting angular rotative variations whereby variation of the pre-chamber events with respect to the crank angle may be achieved. Thus the supplementary chambers may be helically disposed, and/or may be afforded with tapered ports, to permit variability in the time at which the supplementary chamber opens into communication with the cylinder 8, in relation to the engine cycle, by axial movement of the valve member 18 within the cavity 11. Alternatively such adjustment may be obtained by the movement of the mounting of the valve member, or the valve drive shaft, in relation to the valve driving mechanism.

It is to be appreciated that the modifications described and illustrated above are schematic and are not to be taken as indicating precise periods in the engine cycle.

Additionally whilst the ignition device 22 is shown as comprising a single element, if desired more than one such ignition elements may be utilised, as is permitted and desired.

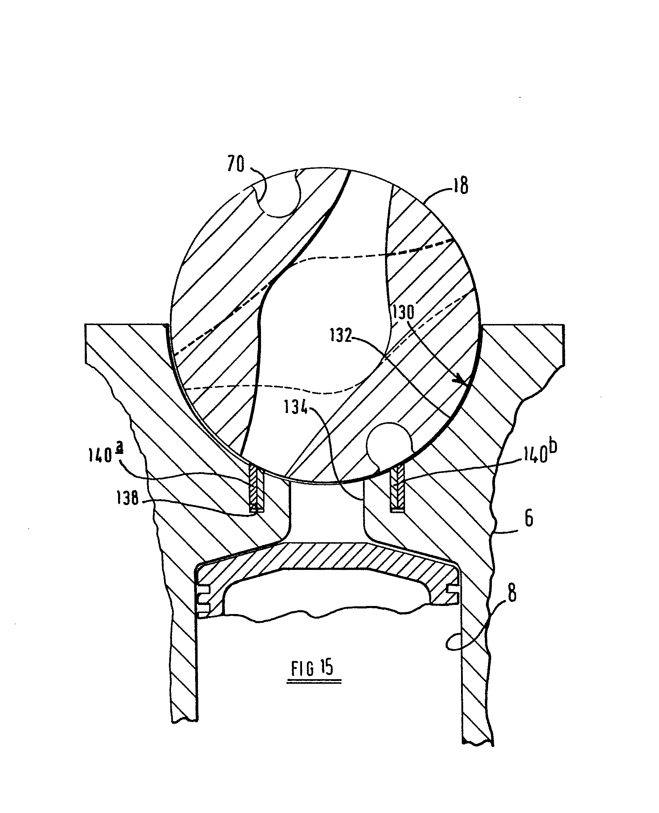

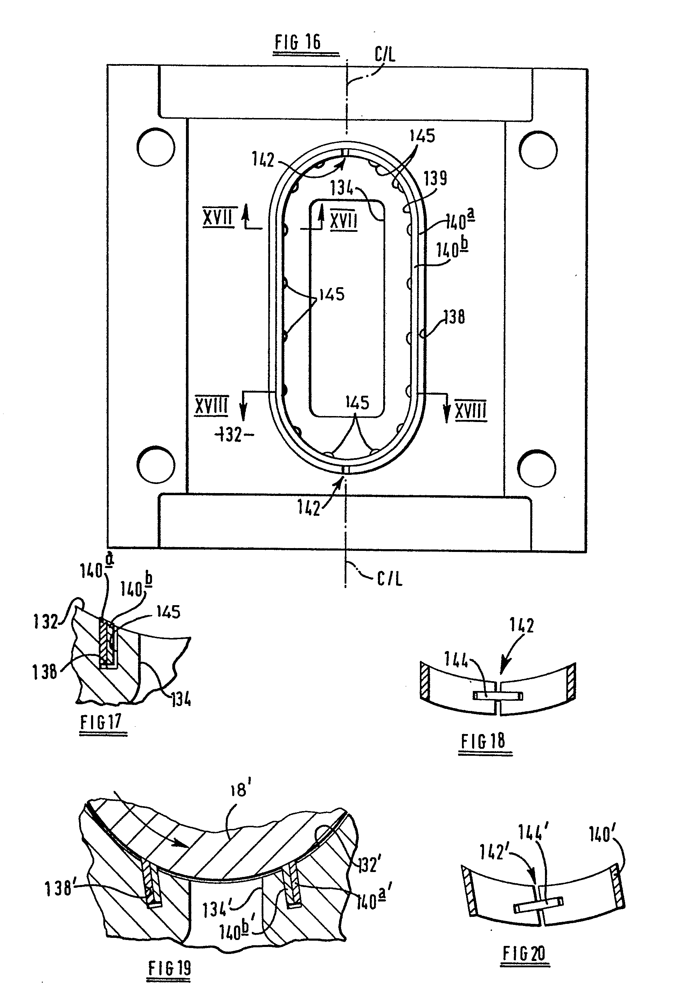

In a further modification of the preferred embodiment, illustrated in Figures 15 to 18, the rotor 18 is mounted in a semi-cylindrical cavity 130 provided in the body 6, the curvature of the surface 132 of the cavity being generally similar to that of the circumferential surface of the rotor, an opening 134 extending from the cavity into the engine cylinder 8. Provided in the surface 132 around the opening 134 is a continuous channel 138, said channel being continuous curved (that is following a smooth line with no corners, comprising opposed parallel sections and semi-circular sections extending therebetween as is shown in Figure 16), and within the channel 138 there is located at least one, preferably two, sealing members 140.

Each sealing member 140 comprises a strip of metal which is inserted into the channel 138 and which conforms to the peripheral shape of the channel, the length of the strip being such that, when the sealing member is in the channel, a small gap 142 is provided at the junction of the end portions of the strip, an arcuate insert 144 being utilised to prevent the escape of gases in an axial direction through this gap (see Figure 18).

It will be appreciated that where two such sealing members are used, the strip providing the outer sealing member 140a will be slightly longer than that providing the inner sealing member 140b.

Most conveniently the junction of each strip is generally on the centreline CL of the opening 134 (see Figure 16) as is shown. However other arrangements may be used, provided that the two junctions and hence the two gaps 142 do not overlap.

The channel 138 may be of uniform depth, with the height of the strip generally equal to the height of the channel, as is shown in Figures 17 and 18. Alternatively, the base of the channel may be planar, the channel thus being of minimum depth on the centreline CL of Figure 16, and increasing in depth to either side in accordance with the curvature of the surface 132. In such circumstances, the sealing members will be of corresponding varying height, so that when fully inserted into the channel an upper margin is provided which extends generally flush with the surface 132.

Preferably resilient means is provided in the channel to urge the sealing member or members away from the base of the channel. Such resilient means may be
afforded by a thin shim or "wavy" spring inserted into
the channel prior to the sealing members and which is
operative to urge the sealing members into positions in
which the upper surfaces thereof are marginally proud of
the surface 132 of the cavity 130, as is shown in Figure
17. In this manner the rotor, with the bearings 19 in
fixed axial relationship with the cavity, is contacted by
engagement surfaces of the s aling members.

Alternatively or in add.tion, the means to urge the
sealing members away from the base of the channel may be
afforded by, or may comprise a ducting system, whereby
pressure pertaining in the cylinder 8 acts upon the
undersides of the sealing member or members to urge them
into contact with the rotor during the period in the
combustion cycle when sealing engagement therebetween is
most necessary. Thus, as is shown in Figure 16, preferably there is provided in the inner surface 139 of the
channel 138 a number of ducts 145 spaced around the inner
periphery of the channel, through which ducts gases may
pass between the channel and the innermost sealing
member, to act on the undersides of both sealing members
to urge them into positions in which the contact surfaces
are proud of the surface 132, to bear against the rotor
18 (see Figure 17).

In the modification illustrated in Figures 15 to 18,
the sealing members are each parallel-sided, extending
generally parallel to the longitudinal axis of the
cylinder 8, the contact surfaces of the sealing members
lying on a cylindrical surface. However in a variation
of this modification, illustrated in Figures 19 and 20,
in which similar numerals with an apostrophe (') are used
to identify parts similar to those illustrated in Figures
15 to 18, the sides of the channel 138' provided in the
surface 132' around the opening 134' are inclined at an
angle to the longitudinal axis of the cylinder. The
sealing members 140a' and 140b' are correspondingly

canted, with the contact surfaces of the sealing members appropriately offset, the direction of such inclination being such that the sealing members lean towards the direction of travel of the rotor surface. In this manner better sealing and drag characteristics are provided on the leading side of the opening, and better wear characteristics of the sealing members are provided on the trailing side of the opening. In this construction, location of the insert 144' is modified in the manner shown in Figure 20.

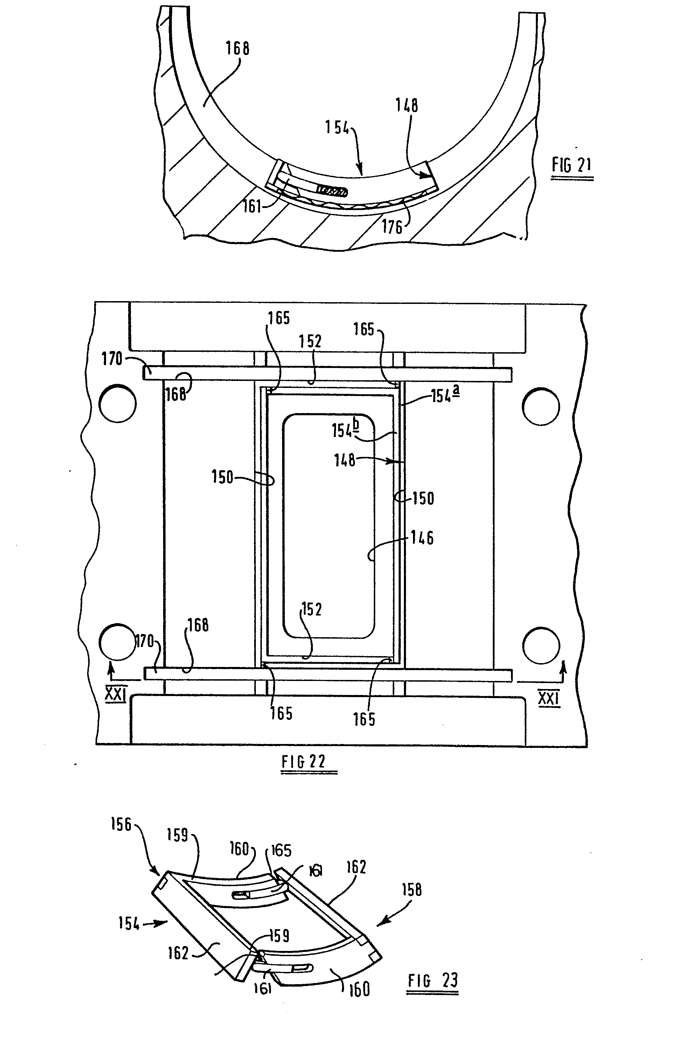

In a further modification of the preferred embodiment of this invention, illustrated in Figures 21 to 23, a similar sealing system is used, but whereas in the second embodiment the channel 138 extending around the opening 134 is continuous curved, in the modification illustrated in Figures 21 to 23, the channel 148 is rectangular in plan view, being provided by a pair of parallel grooves 150 extending on opposite sides of the opening 146 into the cylinder in one direction, and a pair of parallel grooves 152 extending between the grooves 150 also on opposite sides of the opening 146 in the transverse direction. Located in the channel 148 are two similar sealing members 154, (see Figure 23), each comprising two L-shaped parts 156 and 158, each of which parts comprising two perpendicular limbs 160 and 162, which limbs are brazed or welded together as a gas-tight fit.

The limbs 160 of at least the outer sealing member are each provided with a spring plunger 161 which, when the sealing member is inserted into the channel 148, press against the opposing limbs 162 of the other part.

When each sealing member is inserted into the channel, there will be small gaps 165 between each pair of adjacent limbs 160 and 162 of the two parts. However, the two sealing members (which will of course be of slightly different size) are positioned in the channel in different orientations, so that none of the gaps 165 are in alignment.

Thus, with the two sealing members located within the channel, one within the other, the limbs 162 of the outermost sealing member 154a are pressed against the outer sides of the grooves 150 and the limbs 162 of the innermost sealing member 154b are pressed against the limbs 162 of the outermost sealing member.

Outer, contact surfaces of the various limbs of the two sealing members are provided with part-cylindrical surfaces 159, so that the sealing members may bear and seal against the rotor 18 of the engine.

The grooves 152 each open into a larger arcuate groove 168, which is deeper than the groove 150 and 152, and in which grooves 168 arcuate bearing members 170 are provided, said bearing members being flush with the surface of the rotor bore and being held in position by the cylinder head or rotor cover (not shown). The bearing members 170 serve to close the otherwise open ends of the grooves 150, to reduce leakage of gas between the sealing members through the gaps 165, and permit the grooves 150 and 152 to be provided with square corners by a milling operation. In Figure 21, the bearing member has been removed from the groove 168, for clarity.

As with the modification illustrated in Figures 15 to 18, the sealing members of the modification illustrated in Figures 21 to 23 are urged into a position in which they are marginally proud of the housing by a thin shim or "wavy" spring 176 (see Figure 21) into contact with the rotor surface 26.

CLAIMS:

1.   An internal combustion engine comprising a cylinder
(8), a piston (10) in the cylinder, and means
(18,20,22,29) which is operative alternately to deliver a
combustible fluid to the cylinder wherein the combustible
fluid is ignited, and to exhaust gases from said
cylinder (8), the engine comprising a supplementary
chamber (70) which is periodically brought into communication with the engine cylinder (8), and ignition means
(72,74) which is operative to ignite combustible fluid in
the supplementary chamber (70).

2.   An internal combustion engine according to Claim 1
comprising means (76,86) whereby combustible fluid is
delivered to the supplementary chamber (70) prior to the
establishment of communication between the supplementary
chamber (70) and the engine cylinder (8).

3.   An internal combustion engine according to Claim 2
wherein communication is established between the supplementary chamber (70) and the engine cylinder (8)
subsequent to ignition of combustible fluid in the
supplementary chamber (70).

4.   An internal combustion engine according to one of
Claims 1 and 2 wherein communication between the supplementary chamber (70) and the engine cylinder is
established prior to ignition of the combustible fluid in
the supplementary chamber, and gases under pressure flow
from the engine cylinder (8) into the supplementary
chamber (70) in consequence of such communication.

5.   An internal combustion engine according to Claim 4
wherein the flow of gases from the engine cylinder (8) to
the supplementary chamber (70) is arranged to produce a
cyclic or swirling movement within the supplementary chamber (70) which produces stratification of the fuel constituent of the fluid.

6.    An internal combustion engine according to any one of the preceding claims wherein the supplementary chamber (70) is periodically brought into communication with the engine cylinder (8) by means of a member (18) mounted for rotation relative to the engine cylinder in dependence upon the cycle of operation of the engine.

7.    An internal combustion engine according to Claim 6 wherein said member (18) also provides an inlet port (20) through which combustible fluid is delivered to the engine cylinder (8), and/or an exhaust port (22) through which exhaust gases are ducted from the engine cylinder (8).

8.    An internal combustion engine according to Claim 7 wherein the supplementary chamber (70) is provided in the said member (18).

9.    An internal combustion engine according to Claim 7 wherein the supplementary chamber (70) is provided in a housing (6) of the engine in fixed position relative to the engine cylinder (8), and periodic communication between the supplementary chamber (70) and the engine cylinder is afforded by a communication passage (88) in said member (18).

10.   An internal combustion engine according to any one of the preceding claims wherein the construction and arrangement is such as to cause, after the establishment of such communication and after the ignitition of combustible fluid in the supplementary chamber (70), a flame to travel from the supplementary chamber (70) into the engine cylinder (8).

- 28 -    0074174

11.  An internal combustion engine according to any one of Claims 1 to 9 wherein the construction and arrangement is such as to cause, after the establishment of such communication and after the ignition of combustible fluid in the supplementary chamber (70), products of incomplete combustion to migrate from the supplementary chamber (70) into the engine cylinder (8) to produce cascade, or avalanche activation of combustion in the engine cylinder (8) by chemical kinetic initiation.

12.  A rotor (18) for an internal combustion engine of the kind comprising a cylinder and a piston (10) movable in said cylinder (8), the rotor (18) providing means (20,22) which is operative alternately to deliver a combustible fluid to the cylinder (8) wherein the combustible fluid is ignited, and/or to exhaust gases from said cylinder (8), the rotor (18) comprising a generally cylindrical body (24) with at least one port (20 or 22) in the circumferential surface (26) of the body, in which rotor one or more flow passages are provided, each such flow passage comprising a first section (33) lying on or adjacent to the longitudinal axis of the rotor, a second section (36) lying radially outwardly of the first section, and a third section (34,35) extending between the first and second sections which is in thermal conductive contact with the body (24) of the rotor, through which flow passage in use, coolant fluid is caused to flow.

13.  A rotor according to Claim 12 wherein the first section (33) of the passage is utilised as an inlet section, along which coolant fluid flows to the third section (34,35) and thence to the second section (36), said latter section thus constituting the outlet section.

14.  A rotor according to one of Claims 12 and 13 wherein some at least of such passages share a common first section (33), which is afforded by an axial duct (31), with the third sections of the passages extending from the axial duct, and a common second section (36), which is afforded by an axial duct (30) of annular cross-section which extends around the duct (31) affording the first sections.

15. An internal combustion engine according to any one of Claims 1 to 11 comprising a rotary valve member (18) provided with cooling means in accordance with any one of Claims 11, 12, 13 and 14.

16. An internal combustion engine comprising a cylinder (8), a piston (10) in the cylinder, a cylindrical chamber (16) within which is mounted a rotary valve member (18) which provides means which is operative alternately to deliver a combustible fluid to the cylinder (8) wherein the combustible fluid is ignited, and/or to exhaust gases from said cylinder (8), an opening (134,146) extending from the chamber (16) into the engine cylinder, wherein there is provided a continuous channel (138,148) bounding the opening, within which channel a sealing member (140,154) is located, means (145,176) being provided which is operative in the operation of the engine to urge the sealing member (140,154) against the rotor (18).

17. An internal combustion engine according to Claim 16 wherein the sealing member (140,154) comprises or is afforded by thin strip material whereby a relatively small surface area is presented to the rotor (18).

18. An internal combustion engine according to one of Claims 16 and 17 wherein the pressure which is produced in the engine cylinder is effective to increase the pressure of the sealing member (140) on the rotor (18) and this constitutes said means wholly or in part.

19.  An internal combustion engine comprising a cylinder (8), a piston (10) in the cylinder (8), a cylindrical chamber (16) within which is mounted a rotary valve member (18) which provides means which is operative alternately to deliver a combustible fluid to the cylinder wherein the combustible fluid is ignited, and/or to exhaust gases from the cylinder, an opening (39,134,146) extending from the chamber (16) into the engine cylinder, wherein a circumferential surface of the rotor (18) bears against a sealing member (46,140,154) extending around the opening, the construction and arrangement being such that pressure in the engine cylinder is operative to move the sealing member (46,140,154) into sealing engagement with the circumferential surface (26) of the rotor (18).

20.  An internal combustion engine according to Claim 19 wherein the sealing member (46,140,154) provides an extensive sealing surface against which the circumferential surface (26) of the rotor acts.

21.  An internal combustion engine according to Claim 20 wherein the sealing member (46) is mounted for limited movement on the body member of the engine which defines the engine cylinder, and means (58) is provided to effect sealing between the sealing member and that body member.

22.  An internal combustion engine according to one of Claims 20 and 21 wherein that part (60) of the sealing surface of the sealing member (46) which (viewed in the direction of traverse by the rotor 18) is upstream of the opening (39) into the engine cylinder (8) is of greater surface area than that part (62) of the sealing surface which is downstream of said opening.

23.  An internal combustion engine according to any one of Claims 19 to 22 wherein the sealing member (46), or at least the bearing surface (60,62) thereof, is of closed-cell porous construction.

24.   An internal combustion engine according to any one of Claims 1 to 11 comprising a rotary valve member which provides means (20,22) which is operative alternately to deliver a combustible fluid to the engine cylinder (8) wherein the combustible fluid is ignited, and/or to exhaust gases from said cylinder, the engine comprising a sealing member (46,140,154) according to any one of Claims 16 to 23.

FIG 1

FIG 2

0074174

FIG 3

FIG 4

72

56

54

46

48

52

FIG 5

12ª

18ª

74ª

70ª

6ª

10ª

8ª

FIG 6

FIG 7

FIG 8

FIG 9

FIG 10

7/11

FIG. 11

FIG. 12

FIG. 13

FIG. 14

FIG 15

FIG 16

C/L

142    145
134    139
140a
140b

XVII        XVII

145

138

XVIII        XVIII
132

145

142

C/L

140a
140b    145
132
138
134

FIG 17

142
144

FIG 18

18'

132'
138'
134'    140a'
140b'

FIG 19

144'    140'
142'

FIG 20

**0074174**

FIG 21

FIG 22

FIG 23

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | F 02 B 19/10 |
| Y | FR-A-2 483 010 (ROCKWELL) <br> * Page 3, line 17 - page 4, line 31 * & GB - A - 2 079 365 | 1-5 | F 01 L 7/02 <br> F 02 B 19/02 |
| | --- | | |
| Y | US-A-3 896 781 (SMITH) <br><br><br> * Column 2, line 9 - column 4, line 67 * | 1,6,7, 9-12, 16,17, 19-21, 24 | |
| | --- | | |
| A | FR-A-2 304 773 (CHRYSLER) <br><br> * Page 3, line 36 - page 4, line 30 * | 1,4,10 ,11 | |
| | --- | | |
| A | FR-A-2 167 461 (MOIROUX) <br> * Page 3, lines 1-34 * | 1,2,5 | TECHNICAL FIELDS SEARCHED (Int. Cl. ³) |
| | --- | | |
| A | US-A-4 134 381 (LITTLE) <br><br> * Column 11, line 6 - column 13, line 46 * | 1,7,17 -20 | F 02 B <br> F 01 L |
| | --- | | |
| A | US-A-4 016 840 (LOCKSHAW) <br><br> * Column 5, line 9 - column 6, line 62 * | 1,13, 15,17 | |
| | ----- | | |

The present search report has been drawn up for all claims

| Place of search | Date of completion of the search | Examiner |
|---|---|---|
| THE HAGUE | 27-10-1982 | WASSENAAR G. |